# EUROPÄISCHE PATENTSCHRIFT

(11) **EP 1 798 437 B1**
(45) Veröffentlichungstag und Bekanntmachung des Hinweises auf die Patenterteilung: **26.08.2009**
(21) Anmeldenummer: 06025777.1
(22) Anmeldetag: 13.12.2006
(51) Int. Cl.: F16D 65/097, F16D 65/092

(54) **Bremsbelaghalterung**
Brake lining holding device
Fixation de garniture de frein

(30) Priorität: 14.12.2005 DE 102005059801
(43) Veröffentlichungstag der Anmeldung: 20.06.2007
(73) Patentinhaber: KNORR-BREMSE SYSTEME FÜR NUTZFAHRZEUGE GMBH, 80809 München (DE)
(72) Erfinder: Wimmer, Josef, 94474 Vilshofen (DE)
(74) Vertreter: Mattusch, Gundula

(56) Entgegenhaltungen:
- EP-A1- 0 032 462
- EP-A1- 0 336 103
- EP-A2- 1 067 304
- DE-A1- 3 938 881
- GB-A- 2 178 807

## Beschreibung

Die Erfindung betrifft eine Bremsbelaghalterung in einer Scheibenbremse gemäß dem Oberbegriff des Anspruchs 1.

Eine Bremsbelaghalterung ist aus der EP 1 067 304 A2 bekannt. Darin ist eine Belaghaltefeder gezeigt und beschrieben, die aus mehreren Teilen besteht, nämlich einem Drahtbügel und daran angeschlossenen, sich an den Bremsbelägen abstützenden Federarmen. Der Drahtbügel ist einerseits am Bremssattel und andererseits am Bremsträger befestigt und an den Federarmen festgeklemmt.

Aus der WO-A-91/08401, der US-A-3 189 129, der DE-A-39 42 802 sowie der WO-A-90/15 266 ist jeweils eine gattungsgemäße Bremsbelaghalterung benannt, bei der die Belaghaltefeder aus einem gebogenen Federdraht besteht, der sich einerseits an Belagträgerplatten der Bremsbeläge und andererseits am Bremssattel abstützt. Die in der WO-A-91/08401 geoffenbarte Belaghaltefeder ist in einer Ausführungsvariante so konzipiert, dass sie mit einem Ende, die als Flügel ausgebildet sind, an der den Bremsbelägen zugewandten Innenseite des Bremssattels anliegt, während sich das gegenüberliegende Ende an der Außenseite des Bremssattels abstützt.

Der Erfindung liegt die Aufgabe zugrunde, eine Bremsbelaghalterung der gattungsgemäßen Art so weiter zu entwickeln, dass sie konstruktiv einfachst aufgebaut, kostengünstiger herstell- und montierbar ist und ihre Funktionsfähigkeit verbessert wird.

Diese Aufgabe wird durch eine Bremsbelaghalterung mit den Merkmalen des Anspruchs 1 gelöst.

Durch diese konstruktive Ausbildung ist für beide Bremsbeläge lediglich eine gemeinsame Belaghaltefeder erforderlich, die im Gegensatz zum Stand der Technik nicht mehr am Bremsbelag bzw. einer Belagträgerplatte befestigt wird, sondern, entsprechend dem erwähnten Haltebügel, am Bremssattel und zwar in den sich gegenüberliegenden Bereichen, die die Montageöffnung des Bremssattels aktions- und reaktionsseitig begrenzen.

Prinzipiell besteht die Möglichkeit, auf einen separaten Haltebügel zu verzichten, da dessen eigentliche Funktion, nämlich das Niederhalten von Belaghaltefedern entfällt.

Lediglich aus Gründen der Redundanz kann neben der erfindungsgemäßen Belaghaltefeder auch ein Haltebügel vorgesehen sein, wobei beide zweckmäßigerweise in den selben Aufnahmen des Bremssattels festgelegt sind.

Die Position und Form der aus Federdraht geformten Belaghaltefeder kann variiert werden, so dass im Zusammenspiel mit entsprechenden Aufnahmen an den Bremsbelägen eine Kodierung entsteht, durch die gewährleistet ist, dass ausschließlich bestimmte Bremsbeläge insbesondere im Falle einer Auswechselung zum Einsatz kommen. Hierzu zählt auch eine Vertauschsicherheit der beiden zum Einsatz kommenden Bremsbeläge. Naturgemäß wird durch eine solche Kodierung eine Verbesserung der Betriebssicherheit der Scheibenbremse insgesamt erreicht.

Daneben lassen sich durch die Erfindung die Herstellungs- und Montagekosten in bemerkenswerter Weise reduzieren, da nicht nur die Belaghaltefeder als einfaches Biegeteil herstellbar ist, sondern auf weitere einzelne Teile, wie die genannten Schrauben, Bolzen, Splinte oder dergleichen zur Befestigung eines Haltebügels verzichtet werden kann.

Überdies ergibt sich eine vereinfachte Montage unter Verzicht auf vorgeschaltete Montagearbeiten.

Nach der Erfindung ist vorgesehen, dass die Belaghaltefeder im Sinne einer Belagrückholung fungiert, insbesondere des zuspannseitigen, also reaktionsseitigen Bremsbelages.

Hierzu sind Schenkel der Belaghaltefeder in radialer Richtung schräg verlaufend ausgebildet, d.h. ausgehend von der Bremsscheibe in Richtung der Belagträgerplatte nach oben hin ansteigend unter gleichzeitigem formschlüssigem Eingriff der Schenkel in die Belagträgerplatte, so dass eine Komponente der Federkraft der Belaghaltefeder entgegen der Zuspannrichtung wirkt. Vorzugsweise liegt der Winkel der Schrägstellung der Schenkel, bezogen auf die Längsachse der Bremsscheibe zwischen 15° und 60°. Durch diese stetig auf den Bremsbelag einwirkende Rückstellkraft ist eine sozusagen aktive Bremsbelagrückholung gegeben, durch die der Reibbelag des Bremsbelages gegenüber der Bremsschreibe bei Nichtangriff frei läuft, woraus sich ein reduzierter Reibbelagverschleiß ergibt.

Um die Belaghaltefeder an den Belagträgerplatten zumindest in Umfangsrichtung zu fixieren, sind an den Belagträgerplatten Anschläge angeformt. Die zuspannseitigen Anschläge weisen überdies Hinterschneidungen auf, in denen die Schenkel der Belaghaltefeder auch radial gesichert einliegen, so dass die neben der genutzten Federkraftkomponente in axialer Richtung auch die Federkraftkomponente der schrägstehenden Schenkel in radialer Richtung nach oben abgestützt wird. Dabei sind die Hinterschneidungen und die zugeordneten Schenkel der Feder in ihrer Form und Richtung einander angepasst, wodurch sich ein insoweit guter Formschluss ergibt.

Wie erwähnt, ist die Belaghaltefeder aus einem Federdraht hergestellt und ein- oder zweiteilig ausgebildet. Je nachdem wird die Belaghaltefeder mit einer Seite in einer Aufnahmetasche des Bremssattels gehalten oder bei einer zweiteiligen Ausbildung in Bohrungen, in die zwei Enden der Belaghaltefeder eingesteckt sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Bremsbelaghalterung in einer in einem Teilausschnitt dargestellten Scheibenbremse in perspektivischer Ansicht
- Figur 2: eine Einzelheit der Bremsbelaghalterung gesehen in Richtung des Pfeiles II in Figur 1
- Figur 3: eine Seitenansicht auf die Bremsbelaghalterung nach Figur 1
- Figur 4: ein weiteres Ausführungsbeispiel der Bremsbelaghalterung in einem Teilausschnitt einer Scheibenbremse in perspektivischer Darstellung
- Figur 5: eine Einzelheit der Bremsbelaghalterung in einer schaubildlichen Ansicht.

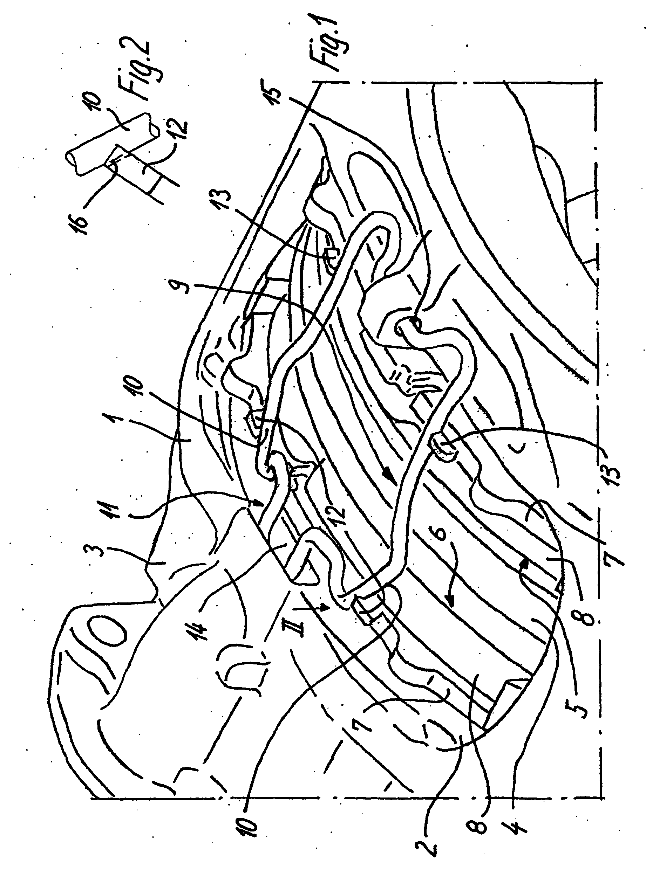

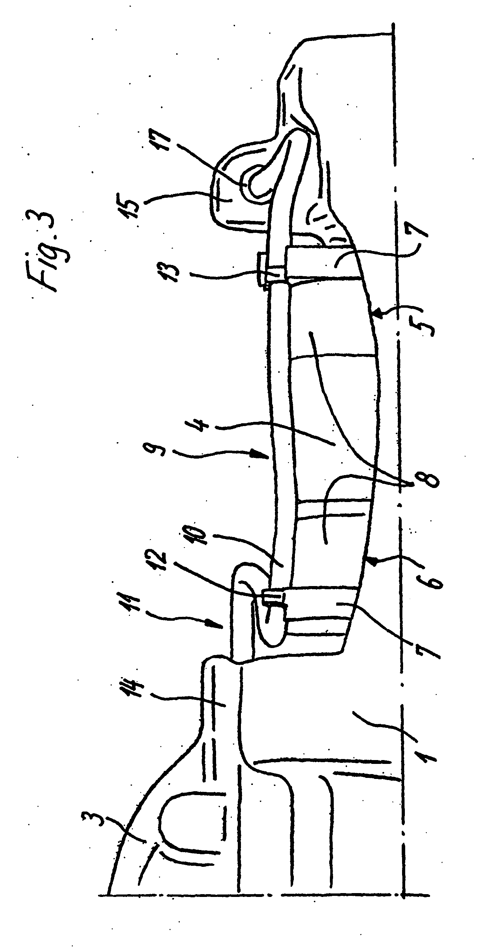

In den Figuren 1, 3 und 4 ist eine Bremsbelaghalterung in einer Scheibenbremse, insbesondere für ein Nutzfahrzeug dargestellt, wobei beidseitig einer Bremsscheibe 4 zugeordnete Bremsbeläge 5, 6 federbelastet in einem Bremssattel 1 gehalten sind, der einen Aufnahmeraum 3 für eine nicht gezeigte Zuspanneinrichtung aufweist, mit der die Scheibenbremse betätigbar ist.

Eine Montageöffnung 2 des Bremssattels 1 ist in Achsrichtung der Bremsscheibe 4 überspannende, im Bremssattel 1gehaltene Belaghaltefeder 9 vorgesehen, die unter Vorspannung an den beiden Bremsbelägen 5, 6 anliegt.

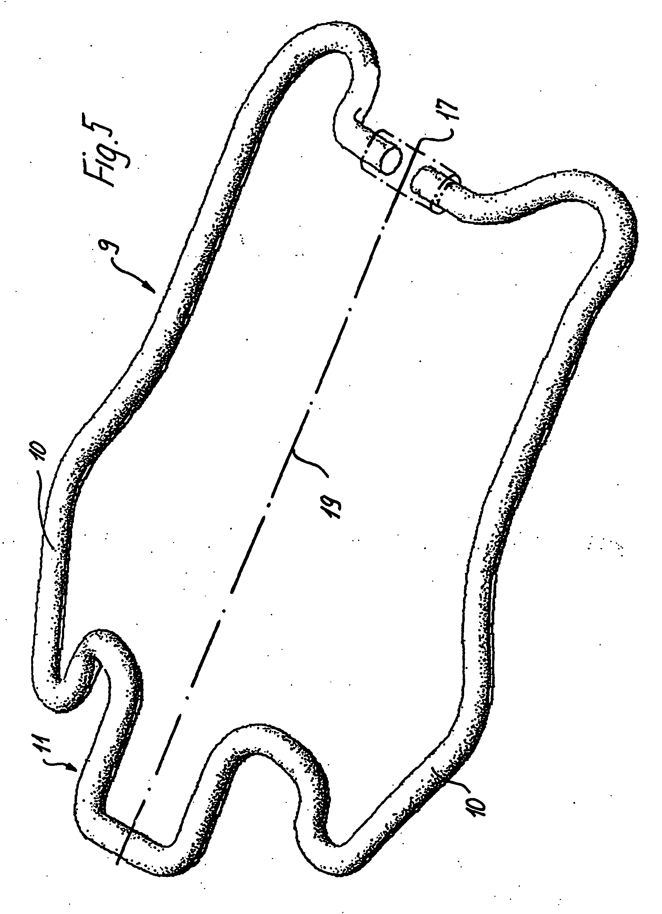

Die Belaghaltefeder 9, die als Einzelheit in der Figur 5 gezeigt ist, ist aus einem Federdraht gebogen und an einem Ende als Zunge 11 ausgebildet, die in einer Tasche 14 auf der dem Aufnahmeraum 3 zugewandten Seite des Bremssattels 1 gehalten ist, wobei diese Tasche 14 in einem die Montageöffnung 2 des Bremssattels 1 begrenzenden Randbereich vorgesehen ist.

Die der Zunge 11 gegenüberliegende Seite der Belaghaltefeder 9 weist zwei aufeinander zu verlaufende Enden auf, die jeweils in eine Aufnahme 15 des Bremssattels 1 gesteckt sind, die in dem dem ersten, taschenseitigen Randbereich des Bremssattels 1 gegenüberliegenden Randbereich vorgesehen sind.

Die beiden Enden der Belaghaltefeder 9 sind in eine Hülse 17 eingesteckt, die in der Figur 5 strichpunktiert dargestellt ist und die im Sinne eines Schlosses ausgebildet ist und mit der die freien Enden der Belaghaltefeder 9 vor einem Aufspringen gesichert sind.

Jeder Bremsbelag 5, 6 besteht aus einer Belagträgerplatte 7 und einem darauf befestigten, im Fall einer Bremsung die Bremsscheibe 4 kontaktierenden Reibbelag 8.

Auf ihren der Belaghaltefeder 9 zugewandten Seite weist jede Belagträgerplatte 7 Anschläge 12, 13 auf, mittels der die Belaghaltefeder 9, die im übrigen der Form der Wölbung des Bremssattels 1 in Drehrichtung der Bremsscheibe 4 folgt, fixiert ist.

Die, bezogen auf ihre Längsachse 19, spiegelsymmetrisch ausgebildete Belaghaltefeder 9 weist in dem der zuspannseitigen Belagträgerplatte 7 zugewandten Bereich zwei Schenkel 10 auf, die in Richtung des Aufnahmeraumes 3 ansteigend verlaufen und sich an der zugeordneten Belagträgerplatte 7 abstützen. Durch diese Schrägstellung der Schenkel 10 wird ein Druck gegen die Zuspannrichtung auf den Bremsbelag 6 ausgeübt, durch den eine aktive Belagrückholung erreicht wird. Je nach Steilheit der Schenkel 10 verändert sich die auf die Belagträgerplatte 7 wirksame, von der Belaghaltefeder 9 ausgeübte Kraftkomponente, d.h., je flacher der Steigungswinkel, bezogen auf die Mittelachse der Bremsscheibe 4 ist, desto geringer ist die wirksame Kraftkomponente. Insofern übernimmt die Belaghaltefeder 9 nunmehr mehrere Funktionen und zwar die Funktion der Bremsbelaghalterung, der Bemsbelagpositionierung in radialer Richtung und der Bremsbelagführung. Als vorteilhaft in diesem Zusammenhang ist überdies zu nennen, dass die Bremsbeläge 5, 6 und die Belaghaltefeder 9 ein gleiches Eigenfrequenzverhalten besitzen.

Zur Aufnahme der nach außen gerichteten wirksamen radialen Kraftkomponente der geneigt verlaufenden Schenkel 10 sind die beiden Anschläge 12 der zuspannseitigen Belagträgerplatte 7 mit Hinterschneidungen 16 versehen, wie eine in der Figur 2 sehr deutlich zu sehen ist. Durch die Hinterschneidung übergreift der entsprechende Anschlag 12 den Schenkel 10 bereichsweise an der Oberseite, so dass in Verbindung mit der seitlichen Abstützung durch den Anschlag 12 ein sicherer Halt der Belaghaltefeder 9 gewährleistet ist.

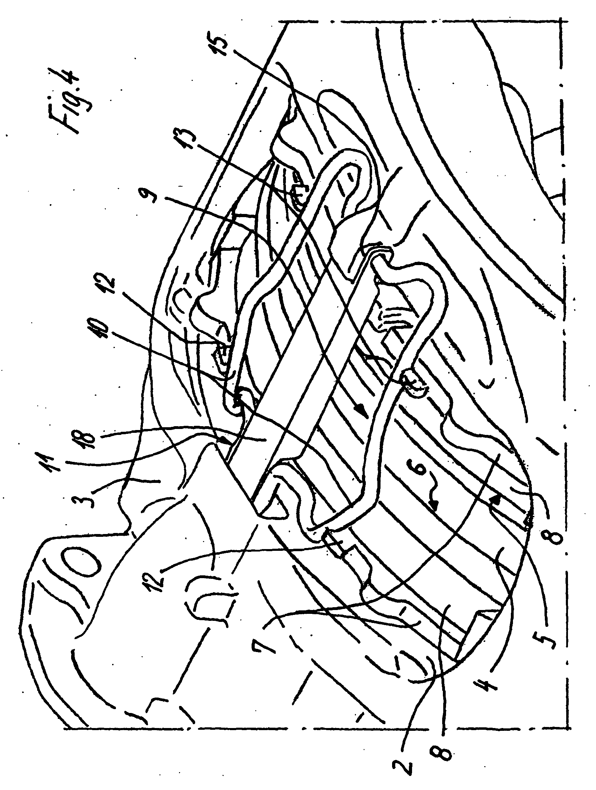

Bei dem in der Figur 4 gezeigten Ausführungsbeispiel ist neben der Belaghaltefeder 9 zusätzlich ein Haltebügel 18 vorgesehen, der einerseits in der Tasche 14 des Bremssattels 1 und andererseits an der Aufnahme 15 gehalten ist und der eine zusätzliche Sicherung bildet für den Fall, dass, aus welchen Gründen auch immer, die Belaghaltefeder 9 außer Funktion gerät. Die Belaghaltefeder 9 und der Haltebügel 18 stellen somit ein redundantes System dar.

### Bezugszeichenliste

- 1: Bremssattel
- 2: Montageöffnung
- 3: Aufnahmeraum
- 4: Bremsscheibe
- 5: Bremsbelag
- 6: Bremsbelag
- 7: Belagträgerplatte
- 8: Reibbelag
- 9: Belaghaltefeder
- 10: Schenkel
- 11: Zunge
- 12: Anschlag
- 13: Anschlag
- 14: Tasche
- 15: Aufnahme
- 16: Hinterschneidung
- 17: Hülse
- 18: Haltebügel
- 19: Längsachse

## Patentansprüche

1. Bremsbelaghalterung in einer Scheibenbremse, insbesondere für Nutzfahrzeuge, mit beidseitig einer Bremsscheibe (4) zugeordneten Bremsbelägen (5, 6), die mittels einer sich daran abstützenden, aus einem gebogenen Federdraht bestehenden Belaghaltefeder (9) federbelastet in einem eine Montageöffnung (2) aufweisenden, die Bremsscheibe (4) umgreifenden, einen Aufnahmeraum (3) für eine Zuspanneinrichtung aufweisenden Bremssattel (1) gehalten sind, und wobei die Belaghaltefeder (9) die Montageöffnung (2) in Achsrichtung der Bremsscheibe (4) überspannt, **dadurch gekennzeichnet, dass** die Belaghaltefeder (9) in einer Tasche (14) und gegenüberliegend in einer Aufnahme (15) des Bremssattels (1) einliegt und in dem dem Aufnahmeraum (3) für die Zuspanneinrichtung zugewandten Bereich zwei Schenkel (10) aufweist, die entgegen der Zuspannrichtung ansteigend ausgebildet sind, wobei die Schenkel (10) an der dem Aufnahmeraum (3) zugewandten Belagträgerplatte (7) des Bremsbelags (6) anliegen.

2. Bremsbelaghalterung nach Anspruch 1, **dadurch gekennzeichnet, dass** die Schenkel (10), bezogen auf die Mittelachse der Bremsscheibe (4) unter einem Winkel von 15° bis 60° ansteigen.

3. Bremsbelaghalterung nach Anspruch 1 oder 2, **dadurch gekennzeichnet, dass** die Belaghaltefeder (9) aus zwei, vorzugsweise gleichen Teilen besteht.

4. Bremsbelaghalterung nach einem der vorhergehenden Ansprüche, **dadurch gekennzeichnet, dass** die Belaghaltefeder (9) entsprechend der konvexen Form der Bremsscheibe (4) gewölbt ist.

5. Bremsbelaghalterung nach einem der vorhergehenden Ansprüche, **dadurch gekennzeichnet, dass** die Schenkel (10) jeweils in einer Hinterschneidung (16) eines zugeordneten, den Schenkel (10) zumindest teilweise übergreifenden Anschlages (12) einliegt, wobei die Anschläge (12) an der Belagträgerplatte (7) des zuspannseitigen Bremsbelages (6) angeordnet sind.

6. Bremsbelaghalterung nach Anspruch 5, **dadurch gekennzeichnet, dass** die Hinterschneidungen (16) der Anschläge (12) an die Form und Steigung der Schenkel (10) angepasst sind.

7. Bremsbelaghalterung nach einem der vorhergehenden Ansprüche, **dadurch gekennzeichnet, dass** die Belaghaltefeder (9) eine angeformte Zunge (11) aufweist, die in der Tasche (14) des Bremssattels (1) einliegt.

8. Bremsbelaghalterung nach Anspruch 7, **dadurch gekennzeichnet, dass** die Belaghaltefeder (9) mit ihren der Zunge (11) gegenüberliegenden Enden in der Aufnahme (15) des Bremssattels (1) einliegt.

9. Bremsbelaghalterung nach einem der Ansprüche 7 oder 8, **dadurch gekennzeichnet, dass** die der Zunge (11) gegenüberliegenden Enden durch ein Schloss, vorzugsweise in Form einer Hülse (17) miteinander verbunden sind.

10. Bremsbelaghalterung nach einem der vorhergehenden Ansprüche, **dadurch gekennzeichnet, dass** zusätzlich ein Haltebügel (18) vorgesehen ist, der einerseits in der Tasche (14) und andererseits an der Aufnahme (15) gehalten ist.

## Claims

1. Brake-lining holding device in a disc brake, in particular for commercial vehicles, comprising brake linings (5, 6) associated with a brake disc (4) on both sides, which are retained by means of a lining-retaining spring (9), which consists of a bent spring wire, under spring load in a brake calliper (1) which comprises a mounting opening (2), encloses said brake disc (4) and includes a receiving space (3) for accommodation of a brake applicator device, and wherein said lining-retaining spring (9) extends over said mounting opening (2) along the axial direction of said brake disc (4), **characterised in that** said lining-retaining spring (9) rests in a pocket (14) and, on the opposite side, in a receiving recess (15) of said brake calliper (1) and comprises two branches (10) in the zone facing said receiving space for accommodation of the brake applicator device, which branches are configured to rise in opposition to said brake applicator device, with said branches (10) bearing against the lining-supporting plate (7) of said brake lining (6), which faces said receiving space (3).

2. Brake-lining holding device according to Claim 1, **characterised in that** said branches (10) rise at an angle from 15° to 60° relative to the centre axis of said brake disc (4).

3. Brake-lining holding device according to Claim 1 or 2, **characterised in that** said lining-retaining spring (9) consists of two, preferably equal, parts.

4. Brake-lining holding device according to any of the preceding Claims, **characterised in that** said lining-retaining spring (9) is dished in correspondence with the convex shape of said brake disc (4).

5. Brake-lining holding device according to any of the preceding Claims, **characterised in that** each of said branches (10) rests in a respective undercut (16) of an associated mechanical stop (12) which encompasses the branch at least partly, with said mechanical stops (12) being disposed on said lining supporting plate (7) of the brake lining (6) on the brake application side.

6. Brake-lining holding device according to Claim 5, **characterised in that** said undercuts (16) of said mechanical stops (12) are matched with the shape and inclination of said branches (10).

7. Brake-lining holding device according to any of the preceding Claims, **characterised in that** said lining-retaining spring (9) includes an integrally shaped blade (11) resting in said pocket (14) of said brake calliper (1).

8. Brake-lining holding device according to Claim 7, **characterised in that** said lining-retaining spring (9) rests in said receiving recess (15) of said brake calliper (1) by its ends opposite to said blade (11).

9. Brake-lining holding device according to any of the Claims 7 or 8, **characterised in that** the ends opposite to said blade (11) are connected to each other by means of a locking element, preferably in the form of a sleeve (17).

10. Brake-lining holding device according to any of the preceding Claims, **characterised in that** additionally a retaining bow (18) is provided which is retained, on the one hand, in said pocket (14) and, on the other hand, on said receiving recess (15).

## Revendications

1. Dispositif d'attache de garniture de frein dans un frein à disque, en particulier pour véhicules utilitaires, comprenant des garnitures de frein (5, 6) affectées à un disque de frein (4) des deux côtés, qui sont retenues moyennant un ressort d'attache de garniture (9), qui consiste en un fil d'acier pour ressorts, à commande par ressort dans un étrier de frein (1) comprenant une ouverture de montage (2), chevauchant ledit disque de frein (4) et renfermant un creux de réception (3) à recevoir un dispositif de serrage de frein, et dans lequel ledit ressort d'attache de garniture (9) s'étend sur ladite ouverture de montage (2) le long de l'orientation axiale dudit disque de frein (4), **caractérisé en ce que** ledit ressort d'attache de garniture (9) est placé dans une poche (14) et, du côté opposé, dans un creux récepteur (15) dudit étrier de frein (1) et comprend deux branches (10) dans la zone en face dudit creux de réception à recevoir le dispositif de serrage de frein, ces branches étant si configurées, qu'elles montent à l'encontre dudit dispositif de serrage de frein, auxdites branches (10) portant contre la plaque de support de garniture (7) de ladite garniture de frein (6), qui se trouve en face dudit creux de réception (3).

2. Dispositif d'attache de garniture de frein selon la revendication 1, **caractérisé en ce que** lesdites branches (10) montent à un angle de 15° à 60° relativement à l'axe centrale dudit disque de frein (4).

3. Dispositif d'attache de garniture de frein selon la revendication 1 ou 2, **caractérisé en ce que** ledit ressort d'attache de garniture (9) consiste en deux parties, de préférence égales.

4. Dispositif d'attache de garniture de frein selon une quelconque des revendications précédentes, **caractérisé en ce que** ledit ressort d'attache de garniture (9) est cintré en correspondance avec la forme convexe dudit disque de frein (4).

5. Dispositif d'attache de garniture de frein selon une quelconque des revendications précédentes, **caractérisé en ce que** chacune desdites branches (10) est placée dans une dépouille inverse respective (16) d'une butée (12) y affectée, qui chevauche la branche, au moins en partie, auxdites butées (12) étant disposées à ladite plaque de support de garniture (7) de la garniture de frein (6) du côté d'approche en serrage du frein.

6. Dispositif d'attache de garniture de frein selon la revendication 5, **caractérisé en ce que** lesdites dépouilles inverses (16) desdites butées (12) sont adaptées à la forme et à l'inclinaison desdites branches (10).

7. Dispositif d'attache de garniture de frein selon une quelconque des revendications précédentes, **caractérisé en ce que** ledit ressort d'attache de garniture (9) renferme une languette y formée de façon intégrale (11), qui est placée dans ladite poche (14) dudit étrier de frein (1).

8. Dispositif d'attache de garniture de frein selon la revendication 7, **caractérisé en ce que** ledit ressort d'attache de garniture (9) est placé dans ledit creux récepteur (15) dudit étrier de frein (1) par ses extrémités opposées à ladite languette (11).

9. Dispositif d'attache de garniture de frein selon une quelconque des revendications 7 ou 8, **caractérisé en ce que** les extrémités opposées à ladite languette (11) sont reliées l'une à l'autre moyennant un élément de serrure, de préférence sous forme d'une douille (17).

10. Dispositif d'attache de garniture de frein selon une quelconque des revendications précédentes, **caractérisé en ce qu'**au plus, une bride de support (18) est disposée, qui est retenue, d'un côté, dans ladite poche (14) et, d'autre côté, audit creux récepteur (15).
